# EUROPÄISCHE PATENTSCHRIFT

(11) **EP 2 020 501 B1**
(45) Veröffentlichungstag und Bekanntmachung des Hinweises auf die Patenterteilung: **21.02.2018**
(21) Anmeldenummer: 08012978.6
(22) Anmeldetag: 18.07.2008
(51) Int. Cl.: F02B 29/04, F02M 26/25

(54) **Wärmetauschergehäuse, Wärmetauscher oder Baueinheit mit einem oder mehreren Wärmetauschern, Abgasrückführsystem, Ladeluftzuführsystem und Verwendung des Wärmetauschers**
Heat exchanger housing, heat exchanger or component with one or more heat exchangers, exhaust gas recycling system, charge air supply system and use of the heat exchanger
Boîtier d'échangeur thermique, échangeur thermique ou composant doté d'un ou plusieurs échangeurs thermiques, système de récupération des gaz d'échappement, système d'alimentation en air de suralimentation et utilisation de l'échangeur thermique

(30) Priorität: 31.07.2007 DE 102007036301
(43) Veröffentlichungstag der Anmeldung: 04.02.2009
(73) Patentinhaber: MAHLE Behr GmbH & Co. KG, 70469 Stuttgart (DE)
(72) Erfinder: Dogan, Aydin, 70376 Stuttgart (DE); Mitchell, Thomas, 71069 Sindelfingen (DE)
(74) Vertreter: Grauel, Andreas

(56) Entgegenhaltungen:
- EP-A2- 1 336 736
- WO-A1-2005/075928
- WO-A2-2007/082676
- US-A1- 2007 125 081

## Beschreibung

Die Erfindung betrifft ein Wärmetauscher-Gehäuse für wenigstens einen Wärmetauscher zum Wärmetausch zwischen einem ersten Fluid und einem zweiten Fluid. Weiter betrifft die Erfindung einen Wärmetauscher oder eine Baueinheit mit einem oder mehreren Wärmetauschem zum Wärmetausch zwischen einem ersten Fluid und einem zweiten Fluid. Die Erfindung betrifft auch ein Abgasrückführsystem, ein Ladeluftzuführsystem und eine Verwendung des Wärmetauschers oder der Baueinheit.

Eine Abgasrückführung oder Ladeluftzuführung, insbesondere mit gekühltem Abgas und/oder Ladeluft, wird in heutigen Fahrzeugen aufgrund gesetzlicher Bestimmungen eingesetzt, um die Partikel- und Schadstoffe, insbesondere Stickoxidemissionen, zu senken. Einerseits steigen dabei die Anforderungen an die Abgasreinhaltung und die zu bewättigenden Abgasmassenströme, andererseits sind solche Systeme und insbesondere die dazu notwendigen Wärmetauscherentwicklungen stark kostengetrieben.

Ein Wärmetauscher dient grundsätzlich zum Wärmetausch zwischen einem ersten Fluid, insbesondere einem Abgas im Falle eines Abgaskühlers oder einer Ladeluft im Falle eines Ladeluftkühlers, und einem zweiten Fluid, insbesondere einem Kühlmittel, beispielsweise einem wasserbasierten Kühlmittel oder einem sonstigen flüssigen oder gasförmigen Kühlmittel. Insbesondere Abgaskühler werden gegebenenfalls mit einem Bypass-Rohr ausgebaut, um die Betriebstemperatur an einer Brennkraftmaschine schneller zu erreichen. Ein Bypass-Kanal kann dazu beispielsweise über eine Klappe zugemacht werden sobald die Betriebstemperatur an der Brennkraftmaschine erreicht ist und ein Wärmetauscher zur Aufnahme des Kühlbetriebs vorgesehen ist. So ist beispielsweise in DE 10 203 003 A1 ein einstufiges Wärmetauschersystem mit einem integriertem Bypass-Kanal und Bypass-Klappe offenbart. Bekannt ist auch ein zweistufiges System von Wärmetauschern mit integriertem Bypass-Kanal mit Bypass-Klappe aus DE 600 243 90 T2. Grundsätzlich ist es bekannt, zur Kostensenkung einen Bypass-Kanal und/oder eine Bypass-Klappe, beispielsweise gemäß DE 199 62 863 A1 oder DE 198 41 927 A1, in einem Modul zusammen mit einem Wärmetauscher zu integrieren. Solche Systeme oder Module sind jedoch noch verbesserungswürdig. Bislang muss zur Herstellung solcher Systeme und/oder Module ein Bypass-Kanal in Form eines Bypass-Rohres separat vom Modul oder dem System hergestellt werden und in ein Wärmetauschergehäuse kassetiert sowie anschließend mit einem geeigneten Anschlussteil des Wärmetauschers, beispielsweise einem Boden am Block des Wärmetauschers, verschweißt werden. Ein Beispiel eines solchen Wärmetauschers ist in US-2007/125081 gezeigt. An dieser Stelle setzt die Erfindung an, deren Aufgabe es ist, eine Vorrichtung, insbesondere ein Wärmetauschergehäuse und einen Wärmetauscher, anzugeben, bei der die Integration eines Bypass-Kanals einfacher und kosteneffektiver realisiert ist.

Betreffend die Vorrichtung wird die Aufgabe durch die Erfindung mit einem Wärmetauschergehäuse der eingangs genannten Art gelöst, das erfindungsgemäß einen Gehäusekörper aufweist mit einer zur Durchströmung von dem zweiten Fluid und zur Aufnahme einer Anzahl von dem ersten Fluid durchströmbarer Strömungskanäle ausgelegten Kammer; einem zur Durchströmung von dem ersten Fluid ausgelegten Bypass-Kanal; wobei die Kammer und der Bypass-Kanal einstückig mit dem Gehäusekörper gebildet sind. Mit anderen Worten, das Konzept der Erfindung sieht vor, dass der Bypass-Kanal im Wärmetauschergehäuse einstückig integriert ist. Dies hat den Vorteil, dass der Bypass-Kanal und das Gehäuse auf besonders einfache und kostensparende Weise in einem einzigen Herstellungsschritt herstellbar sind. Dadurch entfallen die Kostenaufwand erzeugenden und zum Teil aufwändigen separaten Herstellungsschritte für ein Bypass-Rohr bzw. die Kassetierung eines Bypass-Rohres in einem Gehäuse.

Es hat sich gezeigt, dass eine Kosteneinsparung bereits aufgrund der Materialkosten umso höher ist, je länger eine längliche Erstreckung des Bypass-Kanals bzw. des Wärmetauschergehäuses ist.

Betreffend die Vorrichtung wird die Aufgabe durch die Erfindung auch mittels einem Wärmetauscher oder einer Baueinheit mit einem oder mehreren Wärmetauschern der eingangs genannten Art gelöst, der erfindungsgemäß aufweist: einen Block zur voneinander getrennten und wärmetauschenden Führung des ersten und zweiten Fluids, welcher Block ein Wärmetauscher-gehäuse mit integriertem Bypass-Kanal gemäß dem Konzept der Erfindung aufweist und eine in dem Wärmetauschergehäuse aufgenommene Anzahl von dem ersten Fluid durchströmbarer Strömungskanäle aufweist.

Vorzugsweise ist das erste Fluid als ein Abgas und/oder eine Ladeluft gebildet. Ein Wärmetauscher kann vorzugsweise als ein Abgaswärmetauscher und/oder Ladeluftwärmetauscher gebildet sein. Vorzugsweise ist das zweite Fluid in Form eines Kühlmittels, beispielsweise eines wasserbasierten Kühlmittels oder anderen flüssigen Kühlmittels gebildet. Geeignet kann auch ein gasförmiges Kühlmittel sein.

Das Konzept der Erfindung führt auch auf ein Abgasrückführsystem für eine Brennkraftmaschine, aufweisend eine Abgasrückführung, einen Kompressor und einen Wärmetauscher der vorgenannten Art in Form eines Abgaswärmetauschers, insbesondere eines Abgaskühlers.

Das Konzept der Erfindung führt auch auf ein Ladeluftzuführsystem für eine Brennkraftmaschine, aufweisend eine Ladeluftansaugung, einen Luftfilter, einen Kompressor und einen Wärmetauscher der vorgenannten Art in Form eines Ladeluftwärmetauschers, insbesondere Ladeluftkühlers.

Weiter führt die Erfindung auf eine Verwendung des Wärmetauschers oder der Baueinheit der vorgenannten Art für eine Brennkraftmaschine, insbesondere einen Dieselmotor oder Ottomotor eines Kraftfahrzeugs.

Vorteilhafte Weiterbildungen der Erfindung sind den Unteransprüchen zu entnehmen und geben im Einzelnen vorteilhafte Möglichkeiten an, das oben erläuterte Konzept im Rahmen der Aufgabenstellung sowie hinsichtlich weiterer Vorteile zu realisieren.

Vorzugsweise ist der Bypass-Kanal der einzige Bypass-Kanal und/oder erstreckt sich entlang der gesamten Länge einer länglichen Erstreckung des Gehäusekörpers. Insbesondere kann der Bypass-Kanal dazu praktisch die gleiche Länge wie die Kammer aufweisen. Der Bypass-Kanal kann im Querschnitt einer Anwendung entsprechend ausgebildet sein, insbesondere rechteckig, oval oder halboval ausgebildet sein.

Vorzugsweise ist die Kammer zur Aufnahme der Strömungskanäle zweier Wärmetauscher, insbesondere eines Hochtemperaturwärmetauschers und eines Niedertemperaturwärmetauschers, ausgebildet. Im Rahmen einer besonders bevorzugten Weiterbildung ist dazu an einer Innenseite des Gehäusekörpers ein Sockel einstückig mit dem Gehäusekörper gebildet. Vorzugsweise ist der Sockel quer zur länglichen Erstreckung des Gehäusekörpers angeordnet. Vorteilhaft weist er einen trapezförmigen Querschnitt auf. Somit können jeweils die Strömungskanäle eines ersten Wärmetauschers und eines zweiten Wärmetauschers in einen durch den Sockel markierten ersten Teil bzw. zweiten Teil der Kammer angeordnet werden. Ein querschnittlich trapezförmiger Sockel erlaubt dabei eine praktisch selbstjustierende Anordnung der Strömungskanäle.

Gemäß einer Weiterbildung der Erfindung weist das Wärmetauschergehäuse wenigstens ein Anschlussteil, vorzugsweise ein eingangsseitiges und ein ausgangsseitiges Anschlussteil, zur Anbindung wenigstens eines ersten Fluidanschlusses für das erste Fluid auf. Insbesondere ist das Anschlussteil einstückig mit dem Gehäusekörper gebildet. Eine Weiterbildung des Wärmetauschers sieht vorteilhaft vor, dass ein erster Fluidanschluss mit den Strömungskanälen strömungsverbunden an dem Anschlussteil des Gehäusekörpers angeordnet ist. Der erste Fluidanschluss kann beispielsweise als ein Kasten und/oder ein Kastendeckel gebildet sein, vorzugsweise in Form eines Diffusors. Ein eintrittsseitiger Fluidanschluss kann als ein Eintrittsdiffusor und/oder austrittsseitiger Fluidanschluss als ein Austrittsdiffusor gebildet sein. Darüber hinaus hat es sich als vorteilhaft erwiesen, eine Bypass-Regeleinrichtung beim Wärmetauscher zur Einstellung der Abgasführung durch den wenigstens einen Wärmetauscher vorzusehen. Die Regeleinrichtung kann in besonders vorteilhafter Weise im Fluidanschluss integriert sein. Beispielsweise kann eine Bypass-Klappe in einem Diffusor integriert sein. Andere mögliche vorteilhafte Regeleinrichtungen können zusätzlich oder altemativ in Form einer Ventileinrichtung, beispielsweise eines regelbaren Ventils, gebildet sein.

Das Anschlussteil des Wärmetauschergehäuses kann in einer besonders bevorzugten Weiterbildung ausgebildet sein, um - einerseits - insbesondere gehäuseinnenseitig, ein Blockabschlusselement zur Trennung der Kammer und eines ersten Fluidanschlusses für das erste Fluid am Anschlussteil des Gehäusekörpers anzuordnen und/oder - anderenseits - insbesondere gehäuseaußenraumseitig, den Fluidanschluss am Anschlussteil anzuordnen. Das Blockabschlusselement, beispielsweise in Form eines Bodens, ist dazu vorzugsweise mit einer oder mit mehreren Durchgangsöffnungen für die Strömungskanäle versehen.

Im Rahmen einer besonders bevorzugten Weiterbildung ist dazu vorgesehen, das Anschlussteil als einen Flansch auszubilden. Vorzugsweise weist der Flansch gehäuseinnenseitig und/oder gehäuseaußenseitig eine Sicke auf, welche vorzugsweise zur Aufnahme einer Dichtung dient. Es hat sich gezeigt, dass dadurch eine besonders vorteilhafte und fluiddichte Trennung eines ersten Fluids in den Strömungskanälen bzw. einem ersten Fluidanschluss und eines zweiten Fluids in der Kammer möglich ist.

Vorzugsweise weist das Wärmetauschergehäuse auch einen zweiten Fluidanschluss für das zweite Fluid auf, wobei der wenigstens eine zweite Fluidanschluss, beispielsweise ein fluideinlassender und ein fluidauslassender Anschluss, einstückig mit dem Gehäusekörper gebildet ist. In besonders vorteilhafter Weise ist ein zweiter Fluidanschluss in Form eines Stutzens gebildet. Dies hat sich als besonders geeignet zur Anbindung einer Leitung für das zweite Fluid erwiesen.

In einer die vorgenannten Weiterbildungen kombinierenden Form ist das Wärmetauschergehäuse besonders vorteilhaft mit einem Anschlussteil zur Anbindung wenigstens des ersten Fluidanschlusses für das erste Fluid und einem zweiten Fluidanschluss für das zweite Fluid versehen, wobei die ersten und zweiten Fluidanschlüsse einstückig mit dem Gehäuse gebildet sind.

Im Rahmen einer ganz besonders bevorzugten Weiterbildung ist vorgesehen, dass ein Anschlussteil eine Einlassumrandung für das erste Fluid aufweist und diese Einlassumrandung und eine weitere Einlassumrandung des Bypass-Kanals an gleicher Stelle einer länglichen Erstreckung des Gehäusekörpers gebildet sind. Insbesondere kann dazu die Einlassumrandung im Anschlussteil als ein gemeinsames Teil des Gehäusekörpers gebildet sein. Mit anderen Worten, kann ein Anschlussteil - beispielsweise in Form eines achtförmigen Flansches - eine erste Öffnung zu der Kammer aufweisen und eine zweite Öffnung zum Bypass-Kanal aufweisen. Zusätzlich oder alternativ können das Anschlussteil, ebenfalls unter Kombination der vorgenannten Weiterbildungen, und ein zweiter Fluidanschluss an gleicher Stelle einer länglichen Erstreckung des Gehäusekörpers gebildet sein. Vorzugsweise ist dazu der zweite Fluidanschluss am Anschlussteil als ein gemeinsames Teil des Gehäusekörpers gebildet. Dies hat den Vorteil, dass ein zweites Fluid - insbesondere ein Kühlmittel - und ein erstes Fluid - beispielsweise ein Abgas und/oder eine Ladeluft - praktisch an gleicher Stelle der länglichen Erstreckung des Wärmetauschergehäuses zugeführt und abgeführt werden und somit über einen besonders langen Weg entlang der länglichen Erstreckung nebeneinander geführt werden - dies führt zu einer besonders vorteilhaft optimierten Kühlleistung eines Wärmetauschers.

Vorzugsweise ist das Wärmetauschergehäuse mit einer Anzahl von einstückig mit dem Gehäusekörper gebildeten Kühlrippen versehen. Kühlrippen können insbesondere umfänglich und/oder entlang einer länglichen Erstreckung des Gehäusekörpers verlaufen. Je nach Bedarf können die Kühlrippen der Einfachheit halber am Bypass-Kanal und am Kammerteil des Gehäuses durchgehend verlaufen. Grundsätzlich können die Kühlrippen je nach Bedarf und der abzuführenden Wärmemenge ausgelegt sein bzw. zusätzlich oder alternativ als Verstärkungsrippen ausgelegt sein.

Es hat sich gezeigt, dass die Ausführung des Wärmetauschergehäuses als ein Aluminiumgussteil besonders bevorzugt ist. Grundsätzlich kann das Wärmetauschergehäuse auch als ein Stahl- oder als ein Kunststoffteil ausgebildet sein - vorzugsweise als Feinguss- oder Spritzgussteil.

Ausführungsbeispiele der Erfindung werden nun nachfolgend anhand der beschrieben. Diese soll die Ausführungsbeispiele nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in der Zeichnung sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein.

Vorteilhaft ist, dass ein Blockabschlusselement zur Trennung der Kammer und eines ersten Fluidanschlusses für das erste Fluid, an einem Anschlussteil (21, 31) des Gehäusekörpers (10) angeordnet ist, wobei das Blockabschlusselement, insbesondere ein Boden, mit einer oder mit mehreren Durchgangsöffnungen für die Strömungskanäle versehen ist.

Vorteilhaft ist ein Wärmetauscher oder Baueinheit, aufweisend eine Bypass-Regeleinrichtung zur Einstellung der Abgasführung durch den wenigstens einen Wärmetauscher, insbesondere eine Ventileinrichtung und/oder Bypassklappe, und/oder ein Ventil, insbesondere ein Abgasrückführventil.

Vorteilhaft ist, dass eine Regeleinrichtung im ersten, vorzugsweise eingangsseitigen, Fluidanschluss integriert ist, insbesondere eine Bypass-Klappe in einem Diffusor integriert ist.

Vorteilhaft ist ein Wärmetauscher oder Baueinheit, aufweisend einen Hochtemperatur-Wärmetauscher und/oder Niedertemperatur-Wärmetauscher, wobei der Niedertemperatur-Wärmetauscher stromabwärts vom Hochtemperatur-Wärmetauscher angeordnet ist.

Vorteilhaft ist ein Abgasrückführsystem für eine Brennkraftmaschine, aufweisend eine Abgasrückführung, einen Kompressor und gekennzeichnet durch einen Wärmetauscher oder Baueinheit in Form eines Abgas-Wärmetauschers, insbesondere -Kühlers.

Vorteilhaft ist die Verwendung des Wärmetauschers oder der Baueinheit, für eine Brennkraftmaschine, insbesondere einen Diesel-Motor oder Otto-Motor, eines Kraftfahrzeugs.

Im Einzelnen zeigt die Zeichnung in:
- Fig. 1:: eine dreidimensionale perspektivische Ansicht einer besonders bevorzugten Ausführungsform des Wärmetauschergehäuses;
- Fig. 2:: eine dreidimensionale perspektivische Teilschnittansicht des Wärmetauschergehäuses von Fig. 1.

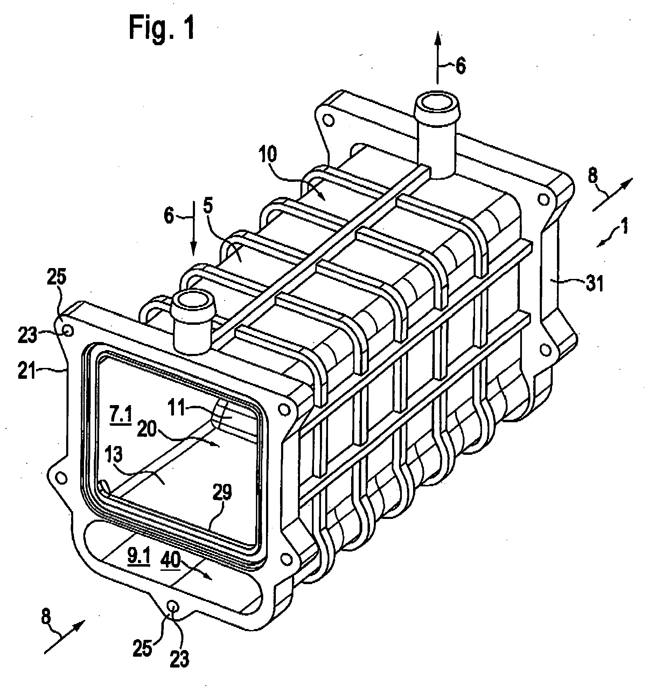

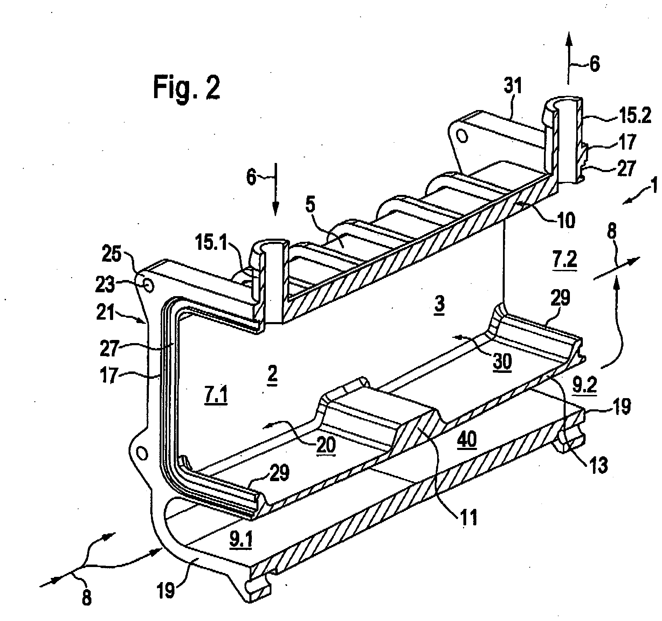

Fig. 1 und Fig. 2 zeigen ein Wärmetauschergehäuse 1 zur Anordnung der von Abgas durchströmbaren Strömungskanäle eines nicht näher dargestellten Hochtemperaturwärmetauschers 2 und der von Abgas durchströmbaren Strömungskanäle eines nicht näher dargestellten Niedertemperaturwärmetauschers 3 jeweils in einem ersten Teil 20 bzw. einem zweiten Teil 30 einer Kammer des Gehäusekörpers 10 des Wärmetauschergehäuses 1. Dieses Gehäuse für die Teile 20, 30 der Kammer wird von einem querschnittlich trapezförmigen und einstückig mit dem Gehäusekörper 10 gebildeten Sockel 11 markiert, wobei die trapezförmige Ausbildung des Sockels 11 zur selbstjustierenden Anordnung des Hochtemperaturwärmetauschers 2 und des Niedertemperaturwärmetauschers 3 in den Teilen 20, 30 der Kammer dient. Das Wärmetauschergehäuse 1 weist darüber hinaus einen Bypass-Kanal 40 auf, welcher durch eine Trennwand 13 von den Teilen 20, 30 der Kammer separiert ist. Der Sockel 11 ist einstückig mit der Trennwand 13 gebildet.

Insgesamt ist der zur Durchströmung von Abgas ausgelegte Bypass-Kanal 40 und die Teile 20, 30 der Kammer einstückig mit dem Gehäusekörper 10 gebildet. Außenseitig werden die Teile 20, 30 der Kammer und der Bypass-Kanal 40 von einer Wandung 5 des Gehäusekörpers 10 begrenzt, wobei in einem Schnitt quer zur länglichen Erstreckung des Gehäuses 1 die Wandung 5 und die Trennwand 13 eine achtförmige Form annehmen, die eine jeweils eingangsseitige und ausgangsseitige erste Öffnung 7.1 bzw. 7.2 zum ersten Teil 20 bzw. zweiten Teil 30 der Kammer sowie eine eingangsseitige zweite Öffnung 9.1 und 9.2 zum Bypass-Kanal 40 ausbilden.

Das Wärmetauschergehäuse 1 ist damit zur Durchströmung mit Abgas 8 durch die Öffnungen 7.1, 7.2 und/oder 9.1, 9.2 ausgelegt.

Darüber hinaus ist einstückig mit dem Gehäusekörper 10 ein einlassseitiger zweiter Fluidanschluss 15.1 sowie ein auslassseitiger zweiter Fluidanschluss 15.2 zur Zuführung bzw. Abführung eines Kühlmittels 6 jeweils in Form eines Stutzens gebildet.

In besonders vorteilhafter Weise verwirklicht die in den Fig. 1 und Fig. 2 beschriebene Ausführungsform eines Wärmetauschergehäuses eine Einlassumrandung 17 eines ersten Teils 20 bzw. eines zweiten Teils 30 der Kammer und eine Einlassumrandung 19 des Bypass-Kanals 40 und einen zweiten Fluidanschluss 15.1 bzw. 15.2 als ein gemeinsames Anschlussteil 21 bzw. 31 des Gehäusekörpers 10. Das eingangsseitige Anschlussteil 21 als auch das ausgangsseitige Anschlussteil 31 sind vorliegend jeweils in Form eines achtförmigen Flansches ausgebildet, der - eckseitig zu einem Teil 20, 30 der Kammer - mit Befestigungsöffnungen 23 aufweisenden Augen 25 versehen ist, um daran gehäuseaußenseitig einen als Diffusor ausgebildeten Kastendeckel zur Zuführung bzw. Abführung des Abgases anzubringen. Ein weiteres mit einer Befestigungsöffnung 23 versehenes Auge 25 am Anschlussteil 21 bzw. 31 ist mittig unterhalb des Bypass-Kanals 40 angeordnet.

Darüber hinaus ist das Anschlussteil 21, 31 mit einer Sicke 27 zur Aufnahme einer Dichtung versehen, um jeweils einen Diffusor am Anschlussteil 21, 31 dichtend anzuordnen und damit eine Abdichtung des in den Teilen 20, 30 geführten Kühlmittels gegenüber dem Abgas zu ermöglichen.

An einer Innenseite 29 des Anschlussteils 21, 31 ist in nicht näher dargestellter Weise ein Blockabschlusselement in Form eines Bodens festlegbar. Ein solcher Boden ist mit mehreren Durchgangsöffnungen zur Aufnahme der Strömungskanäle des Hochtemperaturwärmetauschers 2 bzw. des Niedertemperaturwärmetauschers 3 versehen. In nicht näher dargestellter Weise können zusätzliche Böden jeweils des Hochtemperaturwärmetauschers 2 bzw. Niedertemperaturwärmetauschers 3 am Sockel 11 angeordnet werden.

Damit ist im Rahmen der zuvor beschriebenen Ausführungsform eines Wärmetauschergehäuses 10 ein Gehäusekörper 1 vorgesehen, mit einer zur Beströmung von Kühlmittel und zur Aufnahme einer Anzahl von mit Abgas durchströmbaren Strömungskanälen ausgelegten Kammer als auch ein zur Strömung mit Abgas ausgelegter Bypass-Kanal 40, die beide einstückig mit dem Gehäusekörper 10 gebildet sind. Zudem kann der Gehäusekörper 10 gemäß der zuvor beschriebenen Ausführungsform in besonders vorteilhafter Weise mit Anschlussteilen 21, 31 einstückig gebildet sein, die entsprechende Umrandungen 17, 19 der Kammer und des Bypass-Kanals 40 als auch Anschlussstutzen 15.1, 15.2 für das Kühlmittel vereinen und weiter vorteilhaft zur Anordnung eines Diffusors gehäuseaußenseitig und eines Bodens gehäuseinnenseitig ausgebildet sind. Dies ermöglicht nicht nur eine besonders kosteneffektive, sondern auch besonders einfache Herstellung eines Wärmetauschers, da das Wärmetauschergehäuse in einem Herstellungsschritt, vorliegend im Rahmen eines Aluminiumgusses, herstellbar ist. In einer Abwandlung der vorliegenden Ausführungsform kann das Wärmetauschergehäuse auch als ein Stahlfeingussteil oder als ein Kunststoffspritzgussteil hergestellt werden.

## Patentansprüche

1. Wärmetauscher-Gehäuse (1) für wenigstens einen Wärmetauscher, insbesondere einen Hochtemperatur- und einen Niedertemperatur-wärmetauscher (2, 3), zum Wärmetausch zwischen einem ersten Fluid, insbesondere einem Abgas (8) oder einer Ladeluft, und einem zweiten Fluid, insbesondere einem Kühlmittel (6), aufweisend einen Gehäusekörper mit:
- einer zur Durchströmung von dem zweiten Fluid und zur Aufnahme einer Anzahl von dem ersten Fluid durchströmbarer Strömungskanäle ausgelegten Kammer;
- einem zur Durchströmung von dem ersten Fluid ausgelegten Bypass-Kanal (40); wobei
die Kammer und der Bypass-Kanal (40) einstückig mit dem Gehäusekörper (10) gebildet sind.

2. Wärmetauscher-Gehäuse (1) nach Anspruch 1 weiter aufweisend wenigstens ein Anschlussteil (21, 31) zur Anbindung wenigstens eines ersten Fluidanschlusses für das erste Fluid, wobei das wenigstens eine Anschlussteil (21, 31) einstückig mit dem Gehäusekörper (10) gebildet ist.

3. Wärmetauscher-Gehäuse (1) nach Anspruch 1 oder 2;
**dadurch gekennzeichnet, dass**
ein Anschlussteil (21, 31) als ein Flansch, vorzugsweise als ein Flansch mit Sicke (27), gebildet ist, vorzugsweise mit einer Sicke (27) zur Aufnahme einer Dichtung.

4. Wärmetauscher-Gehäuse (1) nach einem der Ansprüche 1 bis 3,
**gekennzeichnet durch**
jeweils ein separates in Bezug auf das erste Fluid eintrittsseitiges (21) und austrittsseitiges (31) Anschlussteil.

5. Wärmetauscher-Gehäuse (1) nach einem der Ansprüche 1 bis 4 weiter aufweisend wenigstens einen zweiten Fluidanschluss (15.1, 15.2), insbesondere wenigstens einen Stutzen, für das zweite Fluid, wobei der wenigstens eine zweite Fluidanschluss (15.1, 15.2) einstückig mit dem Gehäusekörper (10) gebildet ist.

6. Wärmetauscher-Gehäuse nach einem der Ansprüche 1 bis 5,
**dadurch gekennzeichnet, dass**
ein Anschlussteil (21, 31) eine Einlassumrandung (17) für das erste Fluid aufweist und diese Einlassumrandung (17) und eine Einlassumrandung des Bypass-Kanals (40) an gleicher Stelle einer länglichen Erstreckung des Gehäusekörpers (10) gebildet sind, insbesondere die Einlassumrandungen (17, 19) am Anschlussteil (21,31) als ein gemeinsames Teil des Gehäusekörpers (10) gebildet ist.

7. Wärmetauscher-Gehäuse (1) nach einem der Ansprüche 1 bis 6,
**dadurch gekennzeichnet, dass**
ein Anschlussteil (21, 31) und ein zweiter Fluidanschluss (15.1, 15.2) an gleicher Stelle einer länglichen Erstreckung des Gehäusekörpers (10) gebildet sind, insbesondere der zweite Fluidanschluss (15.1, 15.2) am Anschlussteil (21, 31) als ein gemeinsames Teil des Gehäusekörpers (10) gebildet ist.

8. Wärmetauscher-Gehäuse (1) nach einem der Ansprüche 1 bis 7,
**dadurch gekennzeichnet, dass**
an einer Innenseite (29), insbesondere quer zu einer länglichen Erstreckung des Gehäusekörpers (10), ein Sockel (11), insbesondere ein querschnittlich trapezförmiger Sockel (11), einstückig mit dem Gehäusekörper (10) gebildet ist.

9. Wärmetauscher-Gehäuse (1) nach einem der Ansprüche 1 bis 8,
**dadurch gekennzeichnet, dass**
Kühlrippen, insbesondere umfänglich und/oder entlang einer länglichen Erstreckung des Gehäusekörpers (10) verlaufende Kühlrippen, einstückig mit dem Gehäusekörper (10) gebildet sind.

10. Wärmetauscher-Gehäuse (1) nach einem der Ansprüche 1 bis 9 in Form eines Gussteils, insbesondere eines Feinguss-, Druckguss- oder Spritzgussteils, vorzugsweise in Form eines Aluminium-, oder Stahl- oder Kunststoffteils.

11. Wärmetauscher-Gehäuse (1) nach einem der Ansprüche 1 bis 10,
**dadurch gekennzeichnet, dass**
ein Bypass-Kanal-Querschnitt rechteckig, oval oder halboval ausgebildet ist.

12. Wärmetauscher oder Baueinheit mit einem oder mehreren Wärmetauschern, insbesondere Abgas-Wärmetauscher und/oder LadeluftWärmetauscher, zum Wärmetausch zwischen einem ersten Fluid, insbesondere einem Abgas (8) oder einer Ladeluft, und einem zweiten Fluid, insbesondere einem Kühlmittel (6), aufweisend:
- einen Block zur voneinander getrennten und wärmetauschenden Führung des ersten und zweiten Fluids,
welcher Block ein Wärmetauscher-Gehäuse (1) mit integriertem Bypass-Kanal (4), nach einem der vorhergehenden Ansprüche, und eine in dem Wärmetauscher-Gehäuse (1) aufgenommene Anzahl von dem ersten Fluid durchströmbarer Strömungskanäle aufweist.

13. Wärmetauscher oder Baueinheit nach Anspruch 12,
**dadurch gekennzeichnet, dass,**
wenigstens ein erster Fluidanschluss, insbesondere ein Kasten und/oder ein Kastendeckel, welcher mit den Strömungskanälen strömungsverbunden ist, an einem Anschlussteil (21, 31) des Gehäusekörpers(10) angeordnet ist.

14. Wärmetauscher oder Baueinheit nach Anspruch 12 oder 13,
**dadurch gekennzeichnet, dass**
der Fluidanschluss in Form eines Diffusors, insbesondere eines Eintrittsdiffusors und/oder Austrittsdiffusors, gebildet ist.

15. Ladeluftzuführsystem für eine Brennkraftmaschine, aufweisend eine Ladeluftansaugung, einen Luftfilter, einen Kompressor und
**gekennzeichnet durch**
einen Wärmetauscher oder Baueinheit nach einem der Ansprüche 12 bis 14 in Form eines Ladeluft-Wärmetauschers, insbesondere -Kühlers.

## Claims

1. A heat exchanger housing (1) for at least one heat exchanger, in particular a high-temperature and a low-temperature heat exchanger (2, 3), for exchanging heat between a first fluid, in particular an exhaust gas (8) or charge air, and a second fluid, in particular a coolant (6), having a housing body with:
- a chamber which is designed to be traversed by the second fluid and to hold a number of flow ducts which can be traversed by the first fluid;
- a bypass duct (40) which is designed to be traversed by the first fluid; wherein
the chamber and the bypass duct (40) are formed in one piece with the housing body (10).

2. The heat exchanger housing (1) according to claim 1, also having at least one connecting part (21, 31) for connecting at least one first fluid connection for the first fluid, wherein the at least one connecting part (21, 31) is formed in one piece with the housing body (10).

3. The heat exchanger housing (1) according to claim 1 or 2;
**characterised in that**
a connecting part (21, 31) is formed as a flange, preferably as a flange with a bead (27), preferably with a bead (27) for holding a seal.

4. The heat exchanger housing (1) according to one of claims 1 to 3,
**characterised by**
in each case one separate inlet-side (21) and outlet-side (31) connecting part with respect to the first fluid.

5. The heat exchanger housing (1) according to one of claims 1 to 4, also having at least one second fluid connection (15.1, 15.2), in particular at least one connecting pipe, for the second fluid, wherein the at least one second fluid connection (15.1, 15.2) is formed in one piece with the housing body (10).

6. The heat exchanger housing according to one of claims 1 to 5,
**characterised in that**
a connecting part (21, 31) has an inlet border (17) for the first fluid and said inlet border (17) and an inlet border of the bypass duct (40) are formed at the same point of a longitudinal extent of the housing body (10), in particular the inlet borders (17, 19) are formed on the connecting part (21, 31) as a common part of the housing body (10).

7. The heat exchanger housing (1) according to one of claims 1 to 6,
**characterised in that**
a connecting part (21, 31) and a second fluid connection (15.1, 15.2) are formed at the same point of a longitudinal extent of the housing body (10), in particular the second fluid connection (15.1, 15.2) is formed on the connecting part (21, 31) as a common part of the housing body (10).

8. The heat exchanger housing (1) according to one of claims 1 to 7,
**characterised in that**
a pedestal (11), in particular a pedestal (11) which is trapezoidal in cross section, is formed in one piece with the housing body (10), in particular transversely with respect to a longitudinal extent of the housing body (10) on an inner side (29).

9. The heat exchanger housing (1) according to one of claims 1 to 8,
**characterised in that**
cooling fins, in particular cooling fins which run around the periphery and/or along a longitudinal extent of the housing body (10), are formed in one piece with the housing body (10).

10. The heat exchanger housing (1) according to one of claims 1 to 9 in the form of a cast part, in particular an investment-cast part, die-cast part or injection-moulded part, preferably in the form of an aluminium, steel or plastic part.

11. The heat exchanger housing (1) according to one of claims 1 to 10,
**characterised in that**
a bypass duct cross section is rectangular, oval or semi-oval.

12. A heat exchanger or modular unit having one or more heat exchangers, in particular exhaust-gas heat exchangers and/or charge-air heat exchangers, for exchanging heat between a first fluid, in particular an exhaust gas (8) or charge air, and a second fluid, in particular a coolant (6), having:
- a block for separate and heat-exchanging guidance of the first and second fluid,
which block has a heat exchanger housing (1), with an integrated bypass duct (4), according to one of the preceding claims, and a number of flow ducts which can be traversed by the first fluid and which are held in the heat exchanger housing (1).

13. The heat exchanger or modular unit according to claim 12,
**characterised in that**
at least one first fluid connection, in particular a tank and/or a tank cover which is flow-connected to the flow ducts, is arranged on a connecting part (21, 31) of the housing body (10).

14. The heat exchanger or modular unit according to claim 12 or 13,
**characterised in that**
the fluid connection is formed in the manner of a diffuser, in particular an inlet diffuser and/or outlet diffuser.

15. A charge-air supply system for an internal combustion engine, having a charge-air induction system, an air filter, a compressor and
**characterised by**
a heat exchanger or modular unit according to one of claims 12 to 14, in the form of a charge air heat exchanger, in particular cooler.

## Revendications

1. Carter (1) d'échangeur de chaleur pour au moins un échangeur de chaleur, en particulier un échangeur de chaleur à haute température et à basse température (2, 3), servant à l'échange de chaleur entre un premier fluide, en particulier des gaz d'échappement (8) ou un air de suralimentation, et un deuxième fluide, en particulier un liquide de refroidissement (6), ledit carter présentant un corps de carter comprenant :
- une chambre conçue pour la circulation du deuxième fluide et pour le logement d'un certain nombre de conduits d'écoulement traversés par le premier fluide ;
- un conduit de dérivation (40) conçu pour la circulation du premier fluide ;
où la chambre et le conduit de dérivation (40) sont formés en constituant une seule et même pièce avec le corps de carter (10).

2. Carter (1) d'échangeur de chaleur selon la revendication 1, présentant en outre au moins une pièce de raccordement (21, 31) servant à la fixation d'au moins un premier raccordement de fluide pour le premier fluide, où la pièce de raccordement (21, 31) au moins au nombre de un est formée en constituant une seule et même pièce avec le corps de carter (10).

3. Carter (1) d'échangeur de chaleur selon la revendication 1 ou 2,
**caractérisé**
**en ce qu'**une pièce de raccordement (21, 31) est formée comme une bride, de préférence comme une bride comportant une moulure (27), de préférence comportant une moulure (27) servant au logement d'un joint d'étanchéité.

4. Carter (1) d'échangeur de chaleur selon l'une quelconque des revendications 1 à 3,
caractérisé
à chaque fois par une pièce de raccordement, côté entrée (21) et côté sortie (31), séparée par rapport au premier fluide.

5. Carter (1) d'échangeur de chaleur selon l'une quelconque des revendications 1 à 4 présentant en outre au moins un deuxième raccordement de fluide (15.1, 15.2), en particulier au moins une tubulure pour le deuxième fluide, où le deuxième raccordement de fluide (15.1, 15.2) au moins au nombre de un est formé en constituant une seule et même pièce avec le corps de carter (10).

6. Carter d'échangeur de chaleur selon l'une quelconque des revendications 1 à 5,
**caractérisé**
**en ce qu'**une pièce de raccordement (21, 31) présente une bordure d'entrée (17) pour le premier fluide, et cette bordure d'entrée (17) et une bordure d'entrée du conduit de dérivation (40) sont formées au niveau d'un même emplacement d'une étendue longitudinale du corps de carter (10), en particulier les bordures d'entrée (17, 19) sont formées sur la pièce de raccordement (21, 31), comme une pièce commune du corps de carter (10).

7. Carter (1) d'échangeur de chaleur selon l'une quelconque des revendications 1 à 6,
**caractérisé**
**en ce qu'**une pièce de raccordement (21, 31) et un deuxième raccordement de fluide (15.1, 15.2) sont formés au niveau d'un même emplacement d'une étendue longitudinale du corps de carter (10), en particulier le deuxième raccordement de fluide (15.1, 15.2) est formé sur la pièce de raccordement (21, 31), comme une pièce commune du corps de carter (10).

8. Carter (1) d'échangeur de chaleur selon l'une quelconque des revendications 1 à 7,
**caractérisé**
**en ce qu'**un socle (11) est formé sur un côté intérieur (29), en particulier de manière transversale par rapport à une étendue longitudinale du corps de carter (10), **en ce qu'**un socle (11), qui a en particulier, en section, une forme de trapèze, est formé en constituant une seule et même pièce avec le corps de carter (10).

9. Carter (1) d'échangeur de chaleur selon l'une quelconque des revendications 1 à 8,
**caractérisé**
**en ce que** des ailettes de refroidissement, en particulier des ailettes de refroidissement s'étendant de façon périphérique et / ou en suivant une étendue longitudinale du corps de carter (10), sont formées en constituant une seule et même pièce avec le corps de carter (10).

10. Carter (1) d'échangeur de chaleur selon l'une quelconque des revendications 1 à 9, se présentant sous la forme d'une pièce moulée, en particulier d'une pièce réalisée par moulage de précision, par moulage sous pression ou par moulage par injection, ledit carter étant réalisé de préférence sous la forme d'une pièce en aluminium ou en acier ou en matière plastique.

11. Carter (1) d'échangeur de chaleur selon l'une quelconque des revendications 1 à 10,
**caractérisé**
**en ce qu'**une section de conduit de dérivation est configurée en étant rectangulaire, ovale ou semi-ovale.

12. Echangeur de chaleur ou composant comprenant un ou plusieurs échangeurs de chaleur, en particulier échangeur de gaz d'échappement et / ou échangeur de chaleur d'air de suralimentation, servant à l'échange de chaleur entre un premier fluide, en particulier des gaz d'échappement (8) ou un air de suralimentation, et un deuxième fluide, en particulier un liquide de refroidissement (6), ledit échangeur de chaleur ou composant présentant :
- un bloc prévu pour le guidage du premier et du deuxième fluide, effectué séparément l'un de l'autre et permettant l'échange de chaleur,
lequel bloc présente un carter (1) d'échangeur de chaleur comprenant un conduit de dérivation intégré (4) selon l'une quelconque des revendications précédentes, et présentant un certain nombre de conduits d'écoulement logés dans le carter (1) d'échangeur de chaleur et traversés par le premier fluide.

13. Echangeur de chaleur ou composant selon la revendication 12,
**caractérisé**
**en ce qu'**au moins un premier raccordement de fluide, en particulier une boîte et / ou un couvercle de boîte, qui est relié fluidiquement aux conduits d'écoulement, est disposé sur une pièce de raccordement (21, 31) du corps de carter (10).

14. Echangeur de chaleur ou composant selon la revendication 12 ou 13,
**caractérisé**
**en ce que** le raccordement de fluide est réalisé en se présentant sous la forme d'un diffuseur, en particulier d'un diffuseur d'entrée et / ou d'un diffuseur de sortie.

15. Système fournissant de l'air de suralimentation à un moteur à combustion interne, ledit système présentant une admission d'air de suralimentation, un filtre à air, un compresseur, et
**caractérisé**
**par** un échangeur de chaleur ou un composant selon l'une quelconque des revendications 12 à 14, se présentant sous la forme d'un échangeur de chaleur d'air de suralimentation, en particulier d'un refroidisseur d'air de suralimentation.
